# EUROPEAN PATENT APPLICATION

(11) **EP 3 043 565 A1**
(43) Date of publication of application: **13.07.2016**
(21) Application number: 15203157.1
(22) Date of filing: 30.12.2015
(51) Int. Cl.: H04N 21/234, H04N 21/438, H04N 21/439, H04N 21/44, H04N 21/8358

(54) **METHOD AND APPARATUS FOR IDENTIFYING A BROADCASTING SERVER**

(30) Priority: 07.01.2015 KR 20150001994
(71) Applicant: Samsung Electronics Co., Ltd, Gyeonggi-do 16677 (KR)
(72) Inventor: CHOI, Yoonhee, 16677 Gyeonggi-do (KR)
(74) Representative: Jenkins, Richard Gavin

(57) **Abstract**

An electronic device comprising: a memory; a display; and at least one processor operatively coupled to the memory and the display, configured to: identify a broadcasting server providing content that is currently displayed on the display by using Automatic Content Recognition (ACR), compare a template corresponding to the identified broadcasting server with a template corresponding to a predetermined broadcasting server; and detect whether the broadcasting server providing the content that is currently displayed on the display is changed based on an outcome of the comparison.

## Description

### BACKGROUND

### Field of the Disclosure

The present disclosure relates to electronic devices, in general, and more particularly to a method and apparatus for identifying a broadcasting server.

### Description of the Related Art

Recently, with the development of technology, various electronic devices for reproducing multimedia content have appeared on the market. For example, a portable terminal, a portable notebook PC, and a smart TV can display various kinds of multimedia content on a screen.

Further, with the development of technology for various electronic devices for displaying multimedia content, technology to recognize multimedia content that is executed by a user of an electronic device has also been developed. For example, an external server that uses digital fingerprinting technology can identify the title and the current reproduction position of content that is being activated in the electronic device.

### SUMMARY

According to aspects of the disclosure, an electronic device is provided comprising: a memory; a display; and at least one processor operatively coupled to the memory and the display, configured to: identify a broadcasting server providing content that is currently displayed on the display by using Automatic Content Recognition (ACR), compare a template corresponding to the identified broadcasting server with a template corresponding to a predetermined broadcasting server; and detect whether the broadcasting server providing the content that is currently displayed on the display is changed based on an outcome of the comparison.

According to aspects of the disclosure, an electronic device is provided comprising: a memory; a display; a communication module; and at least one processor operatively coupled to the memory, the display, and the communication module, configured to: identify at least one of a start time and an end time of content currently displayed on the display; generate video identification information corresponding to the content based on at least one of the start time and the end time; and control the communication module to transmit the video identification information to an Automatic Content Recognition (ACR) server.

According to aspects of the disclosure, a method is provided comprising: identifying, by an electronic device, a broadcasting server providing content that is currently displayed on a display of the electronic device by using Automatic Content Recognition (ACR), comparing, by the electronic device, a template corresponding to the identified broadcasting server with a template corresponding to a predetermined broadcasting server; and detecting, by the electronic device, whether the broadcasting server providing the content that is currently displayed on the display is changed based on an outcome of the comparison.

According to aspects of the disclosure, a method is provided comprising: identifying, by an electronic device, at least one of a start time and an end time of content currently displayed on a display of the electronic device; generating, by the electronic device, video identification information corresponding to the content based on at least one of the start time and the end time; and transmitting the video identification information to an Automatic Content Recognition (ACR) server.

### BRIEF DESCRIPTION OF THE DRAWINGS

FIG. 1 is a diagram of an example of a system, according to various embodiments of the present disclosure;
FIG. 2 is a diagram of an example of a system, according to various embodiments of the present disclosure;
FIG. 3 is a diagram an example of an electronic device, according to various embodiments of the present disclosure;
FIG. 4 is a diagram illustrating an example of a content source tracking process, according to various embodiments of the present disclosure;
FIG. 5 is a diagram illustrating an example of a screen shot change, according to various embodiments of the present disclosure;
FIG. 6 is a diagram illustrating an example of a content source tracking process, according to various embodiments of the present disclosure;
FIG. 7 is a diagram illustrating an example of a process for extracting video identification information, according to various embodiments of the present disclosure;
FIG. 8 is a flowchart of an example of a process, according to various embodiments of the present disclosure;
FIG. 9 is a flowchart of an example of a process, according to various embodiments of the present disclosure;
FIG. 10 is a flowchart of an example of a process, according to various embodiments of the present disclosure;
FIG. 11 is a flowchart of an example of a process, according to various embodiments of the present disclosure;
FIG. 12 of an example of a process, according to various embodiments of the present disclosure; and
FIG. 13 of an example of a process, according to various embodiments of the present disclosure.

### DETAILED DESCRIPTION

Hereinafter, various embodiments of the present disclosure will be described in detail with reference to the accompanying drawings. In the accompanying drawings, the same reference numerals are used for the same constituent elements. Further, a detailed description of well-known functions and structures incorporated herein may be omitted to avoid obscuring the subject matter of the present disclosure. In the following description of the present disclosure, only portions that are necessary to understand the operations according to various embodiments of the present disclosure are described, and explanation of other portions will be omitted to avoid obscuring the subject matter of the present disclosure.

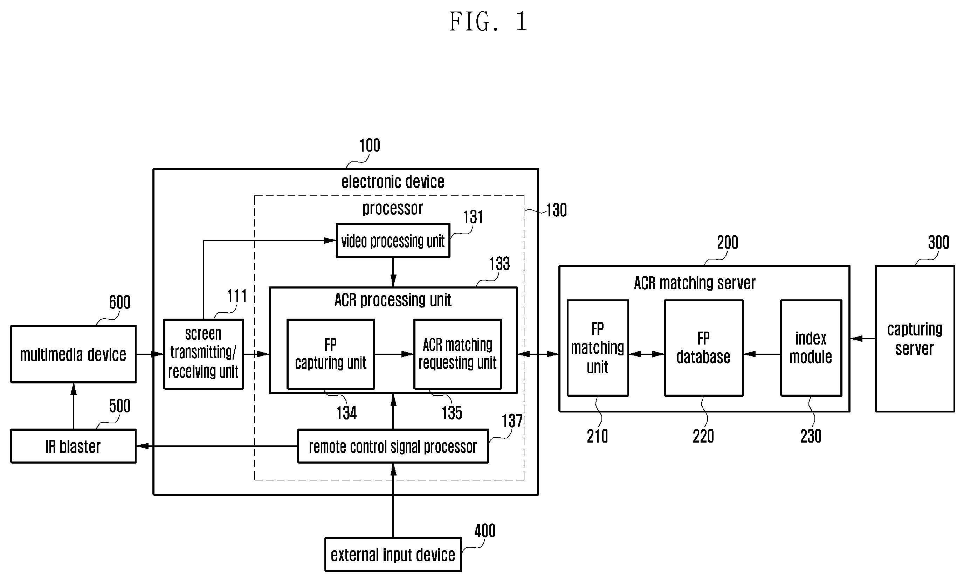

FIG. 1 is a diagram of an example of a system, according to various embodiments of the present disclosure. An electronic device 100 according to an embodiment of the present disclosure may include a processor 130 and a screen transmitting/receiving unit 111. The processor 130 may include any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), etc. Additionally or alternatively, the processor 130 according to an embodiment of the present disclosure may include a video processing unit 131, an Automatic Content Recognition (ACR) processing unit 133, and a remote control signal processor 137. The ACR processing unit 133 may include a Finger Print (FP) capturing unit 134, and an Automatic Content Recognition (ACR) matching requesting unit 135.

The remote control signal processor 137 according to an embodiment of the present disclosure may receive a signal from an external input device 400. For example, the remote control signal processor 137 may convert an Infrared (IR) signal that is received from the external input device 400 into an electrical signal. According to aspects of the present disclosure, the external input device 400 may be any suitable type of device that is capable of transmitting an IR signal. For example, the external input device 400 may be a remote control device, a remote controller, or a portable terminal (*e.g*., a smartphone, a laptop, *etc*.)

The remote control signal processor may determine whether the IR signal corresponds to a predetermined operation (*e.g*., a channel-change operation). The remote control signal processor 137 according to an embodiment of the present disclosure may determine which frequency band of a predetermined IR frequency band the IR signal that is received from the external input device 400 belongs to. Afterwards, the remote control signal processor 137 may determine a function that corresponds to the received IR signal based on the frequency of the received IR signal. For example, the remote control signal processor 137 may determine whether the received IR signal is a signal corresponding to a channel-change operation (*i.e.,* a channel-change signal). The channel-change operation may include a channel-up operation, a channel-down operation, and/or any suitable type of operation which when executed causes the electronic device to change channels. If an IR signal is received from the external input device 400, the remote control signal processor 137 according to an embodiment of the present disclosure may transmit to the ACR processing unit 133 a signal requesting the performance of ACR. If the received IR signal is a signal requesting a channel change (e.g., a signal which when received by the electronic device causes the electronic device to execute a channel-change operation), the remote control signal processor 137 may transmit the signal requesting the performance of ACR to the ACR processing unit 133.

The remote control signal processor 137 according to an embodiment of the present disclosure may operate to transfer the IR signal that is received from the external input device 400 to an IR blaster 500. Here, the IR blaster 500 may be a device that is connected to the electronic device 100 through a short-range communications channel (e.g., a Bluetooth channel, NFC channel, *etc*.). For example, the remote control signal processor 137 may control a communication module 110 to transfer the IR signal that is received from the external input device 400 to the IR blaster 500.

The IR blaster 500 according to an embodiment of the present disclosure may be a separate electronic device (e.g., a portable terminal or a notebook computer) that performs near field communications. The IR blaster 500 may receive from the remote control signal processor 137 a signal requesting a change of the content that is currently displayed on the display of the electronic device 100 (e.g., a channel-change signal). In response to the signal, the IR blaster 500 may transmit to a multimedia device 600 another signal requesting the change of the content. By way of example, the other signal may be a channel-up or a channel-down signal.

The multimedia device 600 according to an embodiment of the present disclosure may be any suitable type of media player (*e.g*., a satellite television receiver, a cable receiver, a streaming player, *etc*.). For example, the multimedia device 600 may receive satellite broadcasting data and/or cable video data, connect to a communications network (*e.g*., the Internet), and exchange data with other devices in the network. In one embodiment, the multimedia device 600 may be a set-top box. For example, the multimedia device 600 may include a tuner for receiving a digital signal, a demodulator/modulator, a memory for storing data, an external interface, and a decoder.

If a signal requesting transmission of audio data and video data is received from the IR blaster 500, the multimedia device 600 according to an embodiment of the present disclosure may transmit at least some of the audio data and the video data that constitute content to the screen transmitting/receiving unit 111.

The screen transmitting/receiving unit 111 according to an embodiment of the present disclosure may receive the audio data and the video data that constitute the content from the multimedia device 600. The screen transmitting/receiving unit 111 according to an embodiment of the present disclosure may transmit the received audio data and video data to the video processing unit 131 and the ACR processing unit 133.

The ACR processing unit 133 according to an embodiment of the present disclosure may receive the audio data and the video data that constitute the content from the screen transmitting/receiving unit 111. The FP capturing unit 134 of the ACR processing unit 133 may extract video identification information of the content that is being displayed on the screen.

The video identification information may include any suitable type of signature that is generated based on the content. For example, the video identification information may be generated based on video data values (e.g., pixel distribution data values or resolution data values) that are associated with the content. As another example, extraction of the video identification information may include generating a signature corresponding to the captured video after capturing of one video screen of the content. As an additional example, the extraction of the video identification information may be replaced by extraction of the audio identification information. For example, the extraction of the audio identification information may include calculating a digital signature of the extracted audio data after extraction of the audio data that is activated on one video screen of the content.

If a signal requesting a channel change (e.g., a signal associated with a channel-change operation) is received from the remote control signal processor 137, the FP capturing unit 134 of the ACR processing unit 133 according to an embodiment of the present disclosure may extract video identification information associated with the content that is being displayed on the screen. The FP capturing unit 134 may transfer the extracted video identification information to the ACR matching requesting unit 135.

The video processing unit 131 according to an embodiment of the present disclosure may receive the audio data and the video data that constitute the content from the screen transmitting/receiving unit 111. If a template corresponding to a broadcasting server that provides the content does not match a template corresponding to a predetermined broadcasting server, the video processing unit 131 may transmit a signal requesting the performance of ACR to the ACR processing unit 133.

If a shot boundary, which is changed in the case where video screen values that constitute the content exceed a predetermined threshold change value, is detected, the video processing unit 131 according to an embodiment may transmit the signal requesting the performance of ACR to the ACR processing unit 133.

If the signal requesting the performance of the ACR is received from the video processing unit 131 or a signal indicating that a channel change request signal is received from the remote control signal processor 137, the ACR matching requesting unit 133 may transmit an ACR request signal to the ACR matching server 200. The ACR matching requesting unit 135 may control the communication module 110 to transfer the video identification information that is extracted from the FP capturing unit 134 and the request signal to the ACR matching server 200.

The ACR matching server 200 according to an embodiment of the present disclosure may receive the video identification information (e.g., multimedia signature information) of the content from the capturing server 300. For example, the ACR matching server 200 may receive pixel distribution values and resolution values of the screens that constitute the content from the capturing server 300.

The capturing server 300 according to an embodiment may receive a broadcasting signal from the broadcasting server. The capturing server 300 according to an embodiment may receive Electronic Program Guide (EPG) information from the broadcasting server (or another external server) and store the received EPG information. Here, the EPG information may include any suitable type of information that is related to a particular content (e.g., program start time, program end time, and program summary information for each channel).

An index module 230 of the ACR matching server 200 according to an embodiment of the present disclosure may be listed on the basis of time information, summary information, and grade information corresponding to each channel based on the received captured information. For example, the index module 230 may transmit listed information to an FP database 220.

The FP database 220 of the ACR matching server 200 according to an embodiment of the present disclosure may store the received listed information therein. The FP database 220 according to an embodiment may store channel information (e.g., channel start time, channel end time, and channel summary information) that is provided by the broadcasting server (e.g., a content providing server). The FP database 220 may transmit content-related information to the FP matching unit 210.

The FP matching unit 210 according to an embodiment may receive a signal requesting the performance of ACR from the ACR processing unit 133 of the electronic device and video identification information (e.g., multimedia signature data of the captured content) from the electronic device 100. The FP matching unit 210 may compare the video identification information that is received from the electronic device 100 with the video identification information (e.g., multimedia signature data) that is received from the FP database 220. If it is determined that the video identification information from the electronic device 100 matches the video identification information stored in the FP database 220, the FP matching unit 210 may transmit a content match response signal to the electronic device 100. If it is determined that the video identification information from the electronic device 100 does not match the video identification information stored in the FP database 220, the FP matching unit 210 may select a broadcasting server that corresponds to the signature that is received from the FP database 220, and transmit to the electronic device 100 information identifying the determined broadcasting server.

The FP matching unit 210 according to an embodiment may transfer the video identification information that is received from the electronic device 100 at the FP database 220. The FP database 220 may store the video identification information that is received from the FP matching unit 210.

The electronic device 100 according to an embodiment may include an application for performing ACR. According to aspects of the disclosure, the application may be an application that includes association information related to the content that is being displayed on the screen (e.g., content production information and product information included in the content). According to aspects of the disclosure, the association information may be received from the external server and may be updated.

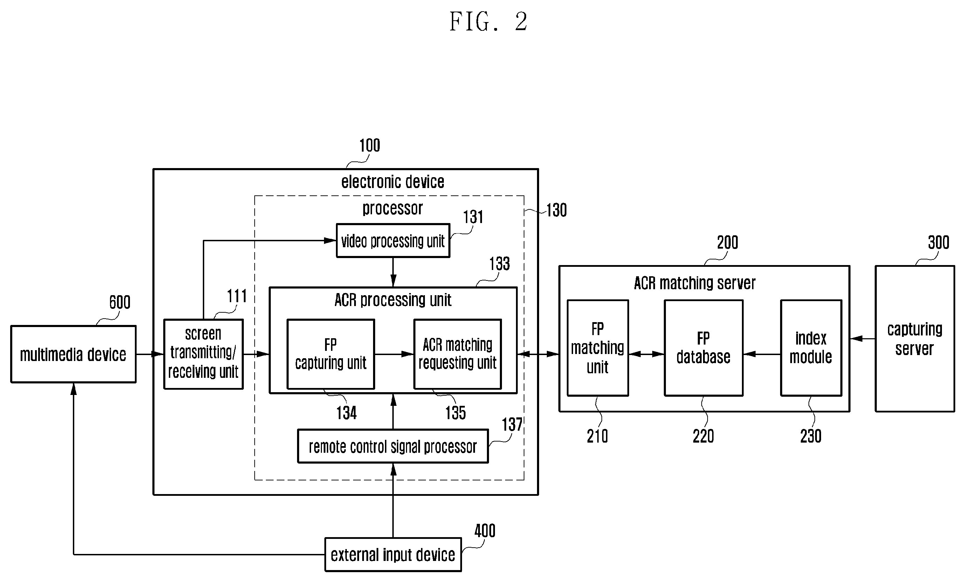

FIG. 2 is a diagram of an example of a system, according to various embodiments of the present disclosure. The functions of the electronic device 100 and the server 200 illustrated in FIG. 2 may be similar to or may be the same as those illustrated in FIG. 1.

A remote control signal processor 137 according to an embodiment of the present disclosure may receive a signal from an external input device 400. For example, the remote control signal processor 137 may convert an IR signal that is received from the external input device 400 into an electrical signal. The external input device 400 may be any suitable type of device, such as a remote control device, a remote controller, or a portable terminal.

In response to receiving the IR signal from the external input device 400, the remote control signal processor 137 may transmit to the ACR processing unit 133 a signal requesting the performance of ACR.

The external input device 400 according to an embodiment may transmit the IR signal to a multimedia device 600. The multimedia device 600 according to an embodiment of the present disclosure may be any suitable type of media player (*e.g*., a satellite television receiver, a cable receiver, a streaming player, *etc*.).. For example, the multimedia device 600 may be a device for receiving cable or satellite broadcasts. In some implementations, the multimedia device 600 may be a set-top box that is connected to the Internet or another communications network.

The multimedia device 600 according to an embodiment of the present disclosure may transmit audio data and video data of content to a screen transmitting/receiving unit 111. The screen transmitting/receiving unit 111 may receive the audio data and the video data that constitute the content from the multimedia device 600.

If a signal requesting the performance of ACR is received from a video processing unit 131 or the remote control signal processor 137, an ACR processing unit 133 according to an embodiment of the present disclosure may transmit to the ACR matching server 200 a signal requesting the performance ACR. The ACR processing unit 133 may receive information related to a server that provides the content from the ACR matching server 200.

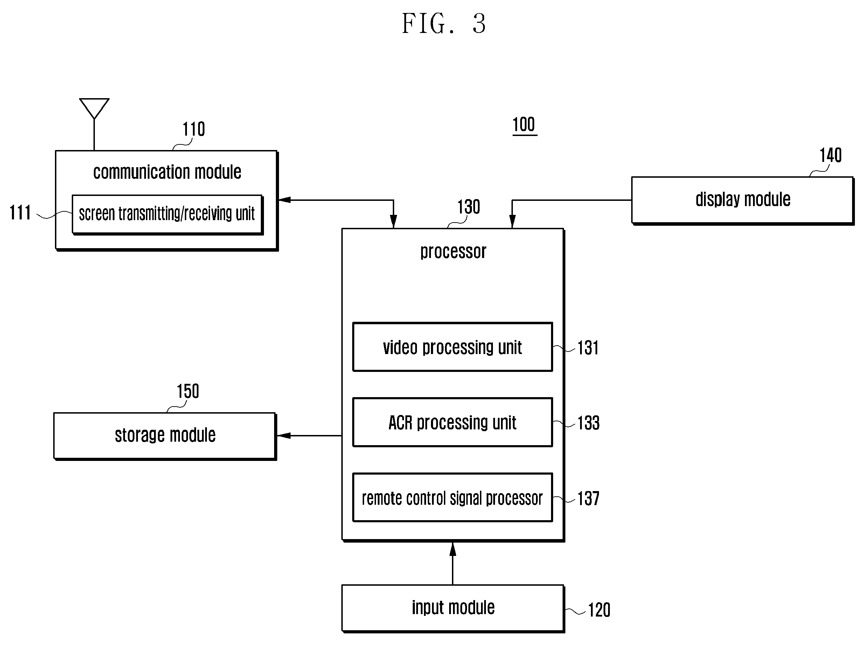

FIG. 3 is a diagram an example of an electronic device 100, according to various embodiments of the present disclosure.

The electronic device 100 according to an embodiment of the present disclosure may be any suitable type of communications terminal. For example, the electronic device 100 may include at least one of a smartphone, a tablet Personal Computer (PC), a mobile phone, a video phone, an e-book reader, a desktop Personal Computer (PC), a laptop Personal Computer (PC), a netbook computer, a Personal Digital Assistant (PDA), a Portable Multimedia Player (PMP), an MP3 player, a mobile medical device, a camera, a wearable device (e.g., Head-Mounted Device (HMD) such as electronic glasses), electronic clothes, an electronic armlet, an electronic necklace, an electronic appcessory, an electronic tattoo, and a smart watch.

In some embodiments, the electronic device 100 may be a smart home appliance having communication function. The smart home appliance may include, for example, at least one of a television receiver, a Digital Video Disk (DVD) player, an audio, a refrigerator, an air conditioner, a cleaning machine, an oven, a microwave oven, a washing machine, an air purifier, a set-top box, a TV box (e.g., Samsung HomeSync^{™}, Apple TV^{™}, or Google TV^{™}), a game console, an electronic dictionary, an electronic key, a camcorder, and a digital photo frame.

In some embodiments, the electronic device 100 may include at least one of various kinds of medical devices (e.g., Magnetic Resonance Angiography (MRA), Magnetic Resonance Imaging (MRI), Computed Tomography (CT), photographing device, and ultrasonic device), a navigation device, a Global Positioning System (GPS) receiver, an Event Data Recorder (EDR), a Flight Data Recorder (FDR), an automotive infotainment device, electronic equipment for a ship (e.g., a navigation system for a ship or a gyro compass), avionics, a secure device, head unit for a vehicle, a robot for industry or home, an Automatic Teller's Machine (ATM) of a financial institution, and a Point Of Sales (POS) of a store.

The electronic device 100 according to an embodiment of the present disclosure may include a communication module 110, an input module 120, a storage module 150, a display module 140, and a processor 130.

The communication module 110 is a communication module for supporting a mobile communication service of the electronic device 100. The communication module 110 forms a communication channel with a mobile communication system. Through this, the communication module 110 may include a radio frequency transmitting unit for up-converting and amplifying a frequency of a transmitted signal and a receiving unit for low-noise-amplifying the received signal and down-converting the frequency.

The communication module 110 according to an embodiment of the present disclosure may include a screen transmitting/receiving unit 111. The screen transmitting/receiving unit 111 may receive audio data and video data that constitute content from the multimedia device 600. The screen transmitting/receiving unit 111 according to an embodiment may transfer the received audio data and video data of the content to the processor 130.

The communication module 110 according to an embodiment of the present disclosure may be connected to an IR blaster 500 via a short-range communications protocol (e.g., Bluetooth, NFC). The communication module 110 according to an embodiment may exchange data with an external server (e.g., ACR matching server 200 or content providing server).

The input module 120 includes a plurality of input keys and function keys for receiving numeral or text information and setting various kinds of functions. The function keys may include a direction key, a side key, and a shortcut key for performing specific functions. Further, the input module 120 generates key signals related to user setting and function control of the electronic device 100 and transfers the generated key signals to the processor 130.

The storage module 150 may include any suitable type of volatile or nonvolatile memory, such as Random-access Memory (RAM), Read-Only Memory (ROM), Network Accessible Storage (NAS), cloud storage, a Solid State Drive (SSD), etc. The storage module 150 may store therein an application program required for functional operations, an application program for reproducing various stored files, and a key map or a menu map for operating the display module 140. Here, the key map and the menu map may have various shapes.

That is, the key map may be a keyboard map, 3*4 key map, or a qwerty key map, and may be a control key map for operation control of an application program that is currently activated. Further, the menu map may be a menu map for operation control of an application program that is currently activated, and may be a menu map having various menus that are provided by the electronic device 100 as items. The storage module 150 may briefly include a program region and a data region.

The program region may store therein an Operating System (OS) for booting of the electronic device 100 and operation of the above-described configurations, an application program for reproducing various files, for example, an application program for supporting a call function in accordance with supported functions of the electronic device 100, a web browser for connecting to an internet server, an MP3 application program for reproducing other sound sources, a video output application program for reproducing photos, and a moving image reproduction application program.

The data region is a region in which data that is generated in accordance with the use of the electronic device 100 is stored, and phone book information, at least one icon according to a widget function, and various pieces of content. Further, in the case where the data region is provided in the display module 140, user input through the display module 140 may be stored in the data region.

The storage module 150 according to an embodiment of the present disclosure may pre-store therein a template (e.g., logo composed of text and video data) that corresponds to a server that provides the content.

The display module 140 displays various kinds of menus of the electronic device 100, information input by a user, and information provided to the user. That is, the display module 140 may provide various screens according to the use of the electronic device 101, for example, a standby screen, a menu screen, a message preparing screen, and a call screen. The display module 140 may be composed of a Liquid Crystal Display (LCD) or an Organic Light Emitting Diode (OLED), and may be included in the input means. Further, the electronic device 100 may provide various menu screens that can be performed on the basis of the display module 140 in accordance with the support of the display module 140.

The display module 140 may be provided in the form of a touch screen through combination with a touch panel. For example, the touch screen may be composed of an integrated module in which a display panel and a touch panel are combined with each other in a laminated structure. The touch panel may recognize a user's touch input through at least one of a capacitive type, a resistive type, an IR type, and an ultrasonic type. The touch panel may further include a controller (not illustrated). On the other hand, in the case of the capacitive type, proximity recognition can be performed in addition to direct touch recognition. The touch panel may further include a tactile layer. In this case, the touch panel may provide a tactile reaction to a user. The display module 140 according to an embodiment, may sense a touch input event for requesting function performing of the portable terminal 100. The display module 140 may transfer information corresponding to the sensed touch input event to the processor 130.

The display module 140 according to an embodiment of the present disclosure may display video content that is composed of a plurality of frames on the screen.

The processor 130 may include any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), etc. The processor 130 may support performing of initialization through control of power supply to respective constituent elements of the electronic device 100, and if such an initialization process is completed, the processor 130 may perform a control operation with respect to the respective constituent elements. The processor 130 according to an embodiment may include a video processing unit 131, an ACR processing unit, and a remote control signal processor 137.

The processor 130 according to an embodiment of the present disclosure may determine a broadcasting server that provides content being displayed on a screen through Automatic Content Recognition (ACR). Here, ACR may be technology for recognizing content that is currently displayed on the screen that relies on digital watermarking and/or digital fingerprinting.

Here, the digital fingerprinting technology may be a technology which captures a digital signature of the content that is being displayed on the screen, transmits the captured digital signature to the external server (e.g., ACR matching server 200), and compares the captured digital signature with a digital signature pre-stored in the external server to identify information related to the content that is being displayed on the screen. Here, in the case of comparing the captured signature with the signature pre-stored in the external server, it becomes possible to compare video data values constituting the content (e.g., pixel data values, audio data values, pixel distribution data values, and resolution data values).

The video processing unit 131 of the processor 130 according to an embodiment of the present disclosure may determine whether the broadcasting server that provides the content being displayed on the screen is changed on the basis of the result of the comparison. Here, the template may be a logo (e.g., KBx, CNx, or SBx) that includes text information and video information corresponding to each broadcasting server.

The video processing unit 131 of the processor 130 according to an embodiment of the present disclosure may determine whether the broadcasting server that provides the content being displayed on the screen is changed on the basis of the result of the comparison. If the template that is being displayed on the screen does not match the template corresponding to the predetermined broadcasting server, the processor according to an embodiment may capture the content that is being displayed on the screen. Here, capturing of the content may include generating a signature corresponding to the content. The extracted multimedia signature may be transmitted to the ACR matching server 200. In the case of receiving the result of the determination of whether the multimedia signatures match each other from the ACR matching server 200, the processor 130 may determine whether the broadcasting server that provides the content being displayed on the screen of the electronic device 100 is changed.

The video processing unit 131 of the processor 130 according to an embodiment of the present disclosure may determine whether a shot boundary, which is changed in the case where video screen values that constitute the content exceed a predetermined threshold change value, is detected. Here, the shot boundary may mean that the video screen values that constitute a first video screen and a second video screen are changed to be equal to or larger than the threshold value. For example, if the video screen values (e.g., pixel distribution value, and resolution value) exceed the predetermined threshold change value (e.g., if the pixel distribution value for each frame is changed to exceed 70% thereof, and the resolution value is changed to exceed 60% thereof), the processor 130 may determine that the shot boundary is detected.

If the comparison of the pre-stored template with the template corresponding to the content that is being displayed on the screen fails to yield a match, the video processing unit 131 of the processor 130 according to an embodiment may determine whether a shot boundary is detected.

If the shot boundary is detected, the video processing unit 131 of the processor 130 according to an embodiment of the present disclosure may control the communication module 110 to transmit a signal requesting a determination of the broadcasting server that provides the content being displayed on the screen to the ACR matching server 200. If the shot boundary is detected, the video processing unit 131 of the processor 130 according to an embodiment may transmit the signal requesting a determination of the broadcasting server that provides the content to the ACR matching server 200 through the ACR processing unit 133.

If the IR signal is received from the external input device 400, the remote control signal processor 137 of the processor 130 according to an embodiment of the present disclosure may control the communication module 110 to transmit the signal requesting determination of the broadcasting server that provides the content being displayed on the screen to the ACR matching server 200.

If the IR signal is received from the external input device 400, the remote control signal processor 137 of the processor 130 according to an embodiment of the present disclosure may extract the multimedia signature of the content that is being displayed on the screen and control the communication module 110 to transmit the extracted multimedia signature to the ACR matching server 200.

The remote control signal processor 137 of the processor 130 according to an embodiment of the present disclosure may determine whether a frequency band of the IR signal that is received from the external input device 400 is included in a frequency band of the pre-stored IR signal. For example, the frequency band of the pre-stored IR signal that is received by the processor 130 may be the frequency band for the channel change that corresponds to the content.

If a signal requesting a change of the content that is being displayed on the screen is received from the multimedia device 600, the processor 130 according to an embodiment of the present disclosure may control the communication module 110 to transmit a signal requesting determination of the broadcasting server that provides the content being displayed on the screen to the ACR matching server 200. Here, the signal requesting the change of the content may be a signal requesting a change of the channel number that corresponds to the content being displayed on the screen.

The processor 130 according to an embodiment of the present disclosure may determine the start time and the end time of the content to be displayed by the display module 140. The processor 130 may extract the video identification information (e.g., multimedia signature) of the content at the start time and the end time of the content. The processor 130 may control the communication module 110 to transmit the extracted video identification information (e.g., multimedia signature) to the ACR matching server 200.

Through the reception of a signal requesting execution of the content, the processor 130 according to an embodiment of the present disclosure may determine the start time of execution of the content. The processor 130 according to an embodiment may determine the end time of the content as the content is ended, or may determine the start time of the execution of the content in the case where the audio signal of the content is sensed. As the audio signal of the content is ended, the processor 130 may determine the end time of the content.

If an audio reproduction length exceeds a threshold audio reproduction length (e.g., 1 minute, 30 seconds, or 10 minutes) in the case where the audio signal of the content is sensed, the processor 130 according to an embodiment of the present disclosure may control the communication module 110 to transmit the extracted multimedia signature to the ACR matching server 200. If the sensed audio signal does not exceed the threshold audio reproduction length, the processor 130 according to an embodiment may check whether the audio signal is generated in real time.

If a user input is sensed while the audio of the content is reproduced, the processor 130 according to an embodiment of the present disclosure may control the communication module 110 to transmit the extracted multimedia signature to the ACR matching server 200. The processor 130 according to an embodiment may receive content ID information and reproduction position information from the external server (e.g., ACR matching server 200 or content server). For example, the processor 130 may identify reproduction situation information using a frame rate of multimedia data while the audio signal is generated.

If a user input for the electronic device 100 is sensed, the processor 130 according to an embodiment may transmit a signal requesting content reproduction state information to the ACR matching server 200. The processor 130 may receive the content reproduction state information (e.g., pause, fast forward, or fast backward) from the electronic device 100.

If it is determined there is association information to be displayed on a content reproduction position, the processor 130 according to an embodiment may control the display module 140 to display the association information on the screen. Here, the association information is content related information, and the data can be received from the external server (e.g., content server). For example, the association information may be content related purchase information or content production company information that is displayed on the screen.

The processor 130 according to an embodiment of the present disclosure may identify the whole reproduction length of the content when the content is reproduced on the screen. The processor 130 according to an embodiment may transmit a signal requesting the performance of ACR to the external server after identifying the whole reproduction length.

After the reproduction of the content, the processor 130 according to an embodiment may extract the multimedia signature of the content for a predetermined time (e.g., 15 seconds, 30 minutes, or 1 minute). The processor 130 may control the communication module 110 to transmit the extracted multimedia signature to the ACR matching server 200.

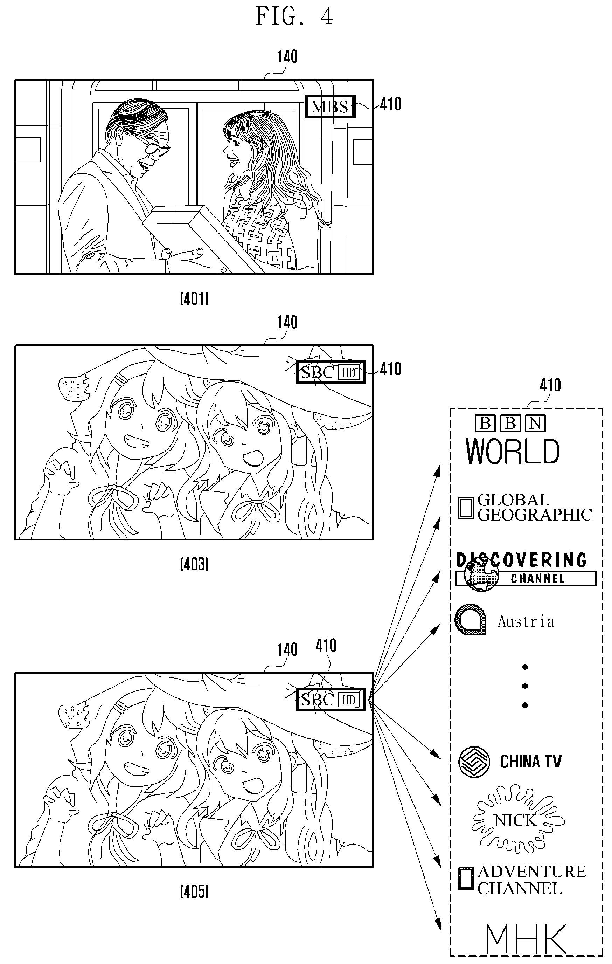

FIG. 4 is a diagram illustrating an example of a content source tracking process, according to various embodiments of the present disclosure.

The video processing unit 131 of the processor 130 according to an embodiment of the present disclosure may generate a template 410 of the screen. The video processing unit 131 according to an embodiment may compare the generated template (e.g., logo) 410 with a pre-stored template that corresponds to the broadcasting server.

As illustrated, for each of the screens 401, 403, and 405, the display module 140 may generate a different template 410. The video processing unit 131 according to an embodiment may identify the template 410 of the content that is displayed in one region of the screen. For example, the template 410 may be of a logo that includes text information and video information identifying a particular broadcasting server. The storage module 150 may pre-store the template corresponding to the broadcasting server and may store related template information that is received from the external server through the communication module 110.

If the video processing unit 131 determines that the template 410 is changed, the processor 130 according to an embodiment of the present disclosure may extract video identification information of the content that is currently being displayed on the screen. The processor 130 may control the communication module 110 to transmit the extracted video identification information to the ACR matching server 200.

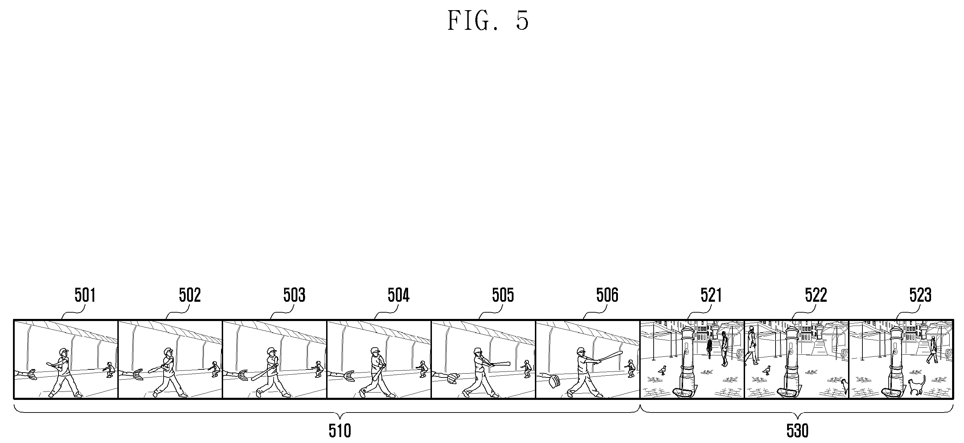

FIG. 5 is a diagram illustrating an example of a screen shot change, according to various embodiments of the present disclosure.

The video processing unit 131 of the processor according to an embodiment of the present disclosure may determine whether the shot boundary, which is changed in the case where video screen values that constitute the content exceed a predetermined threshold change value, is detected.

Video screens that constitute content according to an embodiment of the present disclosure may include a plurality of frames. Referring to FIG. 5, the video screens that constitute the content of the screen may be divided into a first group of video screen frames 510 and a second group of video screen frames 530. The first group of video screen frames 510 may be composed of a first screen 501, a second screen 502, a third screen 503, a fourth screen 504, a fifth screen 505, and a sixth screen 506. The second group of video screen frames 530 may be composed of a seventh screen 521, an eighth screen 522, and a ninth screen 523.

The video processing unit 131 according to an embodiment of the present disclosure may determine whether the video screen values exceed the predetermined threshold change value whenever the frames are changed. For example, when the video screen frames are successively changed in the order of the first screen 501, the second screen 502, the third screen 503, and the fourth screen 504, the video processing unit 131 may determine whether the video screen values exceed the predetermined threshold change value. For example, the predetermined threshold change value may be a pixel distribution value or a resolution value associated with the frame.

When the video screen frame is changed from the sixth screen 506 to the seventh screen 521, the video processing unit 131 according to an embodiment of the present disclosure may detect that the video screen values are changed to exceed the predetermine threshold value.

If the video processing unit 131 detects that the video screen values are changed to exceed the predetermined threshold value, the processor 130 according to an embodiment of the present disclosure may extract the video identification information of the content that is currently being displayed. The video identification information may be another signature corresponding to the content. For example, the video identification information may be generated based on an entire screen that is part of the content and/or a plurality of screens. The processor 130 may control the communication module 110 to transmit the extracted video identification information to the ACR matching server 200.

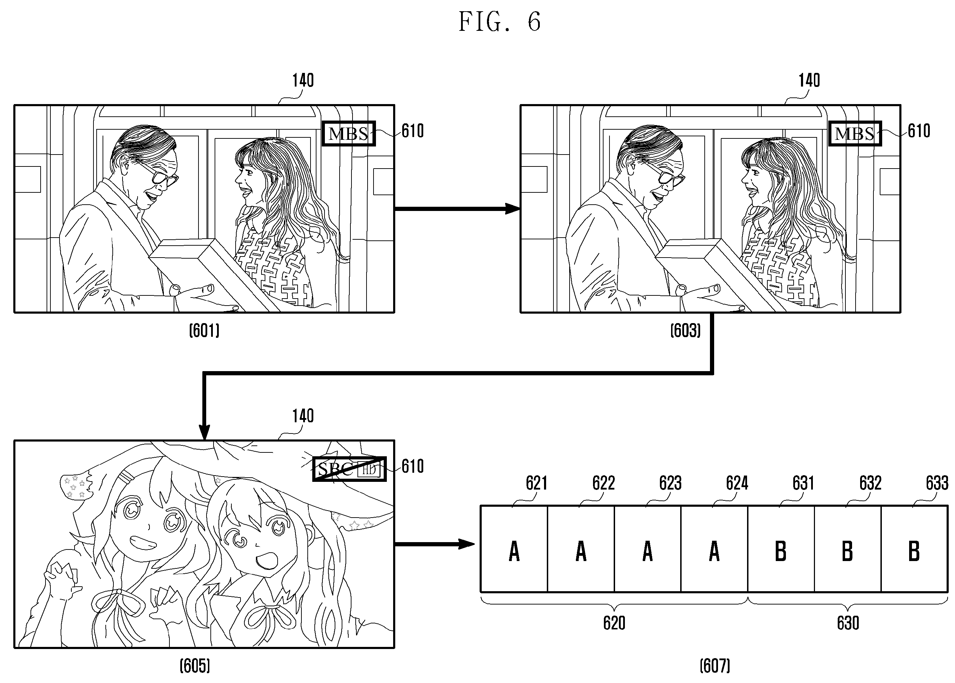

FIG. 6 is a diagram illustrating an example of a content source tracking process, according to various embodiments of the present disclosure.

The video processing unit 131 of the processor 130 according to an embodiment of the present disclosure may generate a template 610 of the screen. The video processing unit 131 according to an embodiment may compare the generated template (e.g., logo) 610 with the pre-stored template that corresponds to the broadcasting server. If tracking of the template 610 of the content has failed, the video processing unit 131 may determine whether the shot boundary for sensing the change of the video screen values constituting the content is detected.

Referring to stages 601 and 603, the video processing unit 131 according to an embodiment of the present disclosure may track the template of the content that is currently being displayed. The video processing unit 131 according to an embodiment may determine whether the generated template matches the pre-stored template.

Referring to stage 605, the video processing unit 131 according to an embodiment of the present disclosure may detect that the generated template does not match the pre-stored template.

Referring to stage 607, in response to detecting that the generated template does not match the pre-stored template, the video processing unit 131 according to an embodiment of the present disclosure may determine whether the shot boundary, which is changed in the case where the video screen values that constitute the content exceed the predetermined threshold change value, is detected.

For example, the content may be composed of a first group of video screen frames 620 including a plurality of frames 621, 622, 623, and 624 and a second group of video screen frames 630 including other frames 631, 632, and 633. When the screen is changed to the next frames, the plurality of frames 621, 622, 623, and 624 and other frames 631, 632, and 633 may have the changed video screen values that are equal to or smaller than the predetermined threshold value. If the video screen values are changed to exceed the predetermined threshold value (e.g., screen pixel value or resolution value) in a state where the screen is changed from the frame 624 to another frame 631 according to an embodiment, the video processing unit 131 may detect that a shot boundary is detected.

If the video processing unit 131 detects the shot boundary, the processor 130 according to an embodiment may extract the video identification information of the content that is currently being displayed. The processor 130 may control the communication module 110 to transmit the extracted video identification information to the ACR matching server 200.

### FIG. 7.

The processor 130 is a diagram illustrating an example of a process for extracting video identification information, according to various embodiments of the present disclosure. The processor 130 according to an embodiment may extract the video identification information of the content at the start time and the end time of the content. The processor 130 according to an embodiment may control the communication module 110 to transmit the extracted video identification information to the ACR matching server 200.

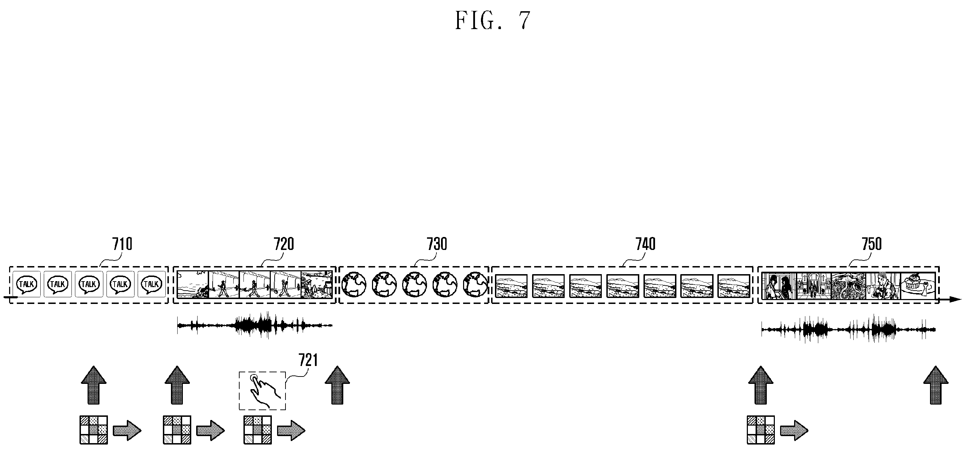

Referring to FIG. 7, the processor 130 may execute first content 710, second content 720, third content 730, fourth content 740, and fifth content 750. By way of example, executing any of the contents may include one or more of decompressing the content, decoding the content, and/or displaying the content.

The processor 130 according to an embodiment of the present disclosure may detect whether an audio signal is generated during the execution of the first content 710. If it is determined that the audio signal has not been generated during execution of the first content 710, the processor 130 may not extract video identification information corresponding to the first content 710.

The processor 130 according to an embodiment may detect that an audio signal is generated at the start time of the second content 720. As the audio signal is generated, the processor 130 may generate video identification information of the content, and may control the communication module 110 to transmit the generated video identification information to the ACR matching server 200.

The processor 130 according to an embodiment may determine that a user input 721 is sensed while the second content 720 is being reproduced. For example, the user input 721 may include a touch input event for the display module 140. As the user input 721 is sensed during reproduction of the second content 720, the processor 130 may extract the video identification information of the second content 720, and may control the communication module 110 to transmit the extracted video identification information to the ACR matching server 200.

The processor 130 according to an embodiment may sense that the audio signal of the second content 720 is ended. The processor 130 may detect that playback of the third content 730 has commenced based on the audio signal ending. Afterwards, the processor 130 may extract the video identification information of the third content 730, and may control the communication module 110 to transmit the extracted video identification information to the ACR matching server 200.

The processor 130 according to an embodiment may periodically detect whether an audio signal is present during execution of the third content 730 and the fourth content 740.

The processor 130 according to an embodiment may sense that a new audio signal has become available when the fifth content 750 is executed. As the audio signal of the fifth content 750 is generated, the processor 130 may extract the video identification information of the fifth content 750, and may control the communication module 110 to transmit the extracted video identification information to the ACR matching server 200.

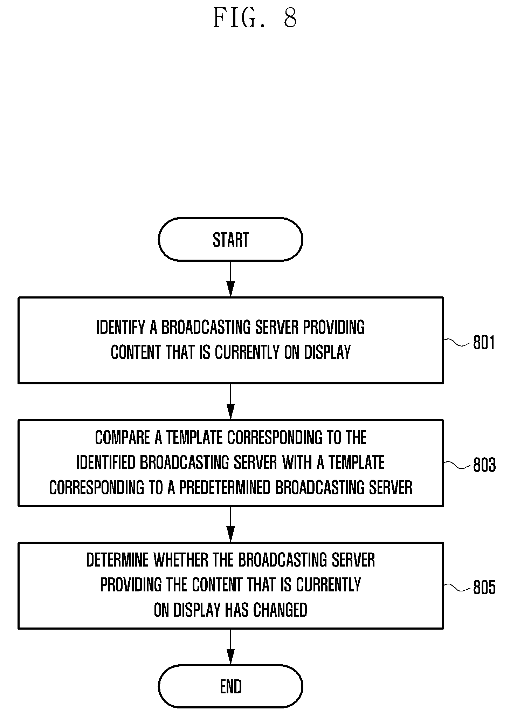

FIG. 8 is a flowchart of an example of a process, according to various embodiments of the present disclosure.

At operation 801, the processor 130 identifies the broadcasting server that provides the content being displayed by the display module 140 through ACR. By way of example, the ACR may be technology that determines the broadcasting server that provides the content being displayed on the display module 140 through comparison of the extracted multimedia signature of the captured screen of the content that is being displayed on the display module 140 with the multimedia signature pre-stored in the server (e.g., ACR matching server 200) that performs the ACR.

At operation 803, the processor 130 compares the template corresponding to the determined broadcasting server with the template corresponding to the broadcasting server. Here, the template may be a logo (e.g., data including video data and text data) that corresponds to the server providing the content.

At operation 805, the processor 130 determines whether the broadcasting server that provides the content being displayed by the display module 140 is changed on the basis of the result of the comparison.

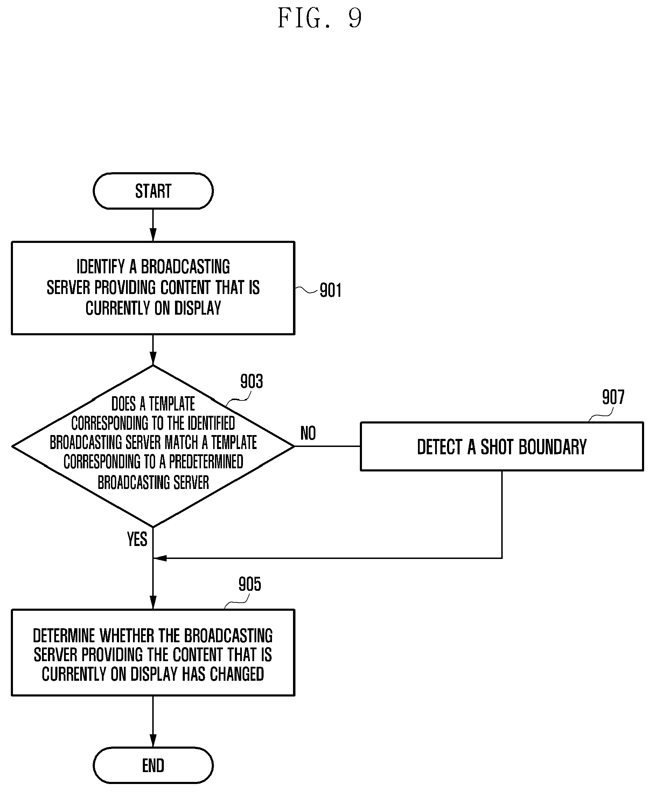

FIG. 9 is a flowchart of an example of a process, according to various embodiments of the present disclosure.

At operation 901, the processor 130 determines the broadcasting server that provides the content being displayed by the display module 140 through ACR. Here, the ACR may be technology that determines the broadcasting server that provides the content being displayed on the display module 140 through comparison of the extracted multimedia signature of the captured screen of the content that is being displayed on the display module 140 with the multimedia signature pre-stored in the server (e.g., ACR matching server 200) that performs the ACR.

At operation 903, the processor 130 compares the template corresponding to the determined broadcasting server with a template corresponding to the predetermined broadcasting server. For example, the template may be a logo (e.g., a logo including one or more of a video sequence, an image, and/or text) that corresponds to the server providing the content.

If the templates match, at operation 905, the processor 130 determines whether the broadcasting server that provides the content being displayed by the display module 140 is changed.

If the templates do not match, at operation 907, the processor 130 determines whether the boundary, which is changed in the case where the video screen values that constitute the content exceed a predetermined threshold change value, is detected.

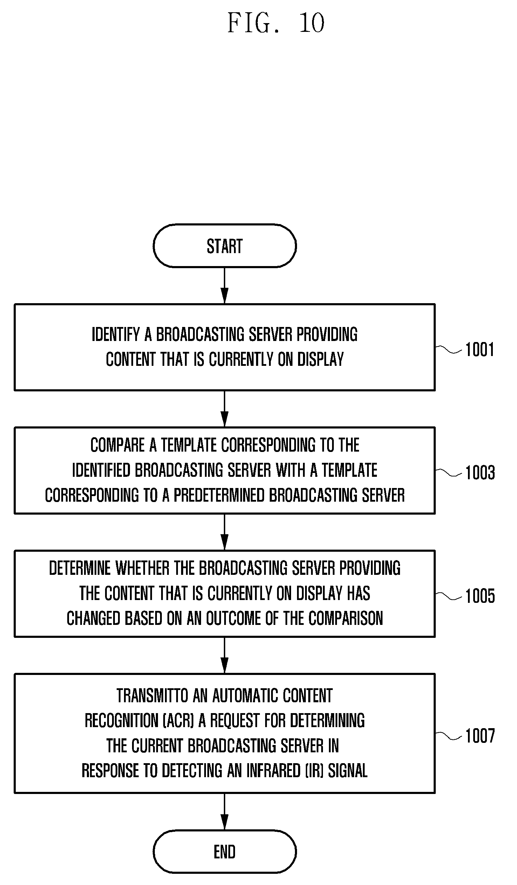

FIG. 10 is a flowchart of an example of a process, according to various embodiments of the present disclosure.

At operation 1001, the processor 130 determines the broadcasting server that provides the content that is currently displayed by the display module 140 through ACR. Here, the ACR may be technology that determines the broadcasting server that provides the content being displayed on the display module 140 through comparison of the extracted multimedia signature of the captured screen of the content that is being displayed on the display module 140 with the multimedia signature pre-stored in the server (e.g., ACR matching server 200) that performs the ACR.

At operation 1003, the processor 130 compares a template corresponding to the determined broadcasting server with the template corresponding to the predetermined broadcasting server. Here, the template may be a logo (e.g., a logo including one or more of a video sequence, an image, and/or text).

At operation 1005, the processor 130 determines whether the broadcasting server that provides the content that is currently displayed by the display module 140 is changed based on the result of the comparison.

At operation 1007, if an IR signal is received from the external input device 400, the processor 130 transmits a signal requesting a determination of the broadcasting server that provides the content being displayed by the display module 140 to the ACR matching server 200.

Additionally or alternatively, if a shot boundary is detected, the processor 130 according to an embodiment may control the communication module 110 to transmit a signal requesting a determination of the broadcasting server that provides the content being displayed by the display module 140 to the ACR matching server 220.

If the IR signal is received from the external input device 400, the processor 130 according to an embodiment may control the communication module 110 to transmit to the ACR matching server 200 a signal requesting a determination of the broadcasting server that provides the content being displayed by the display module 140.

If the IR signal is received from the external input device 400, the processor 130 according to an embodiment may extract the video identification information (e.g., a signature) of the content that is being displayed by the display module 140, and may control the communication module 110 to transmit the extracted video identification information (e.g., a signature) to the ACR matching server 200.

The processor 130 according to an embodiment may receive audio data and video data that constitute content from the multimedia device 600. If the frequency band of the IR signal that is received from the external input device 400 is included in the frequency band of the pre-stored IR signal, the processor 130 according to an embodiment may control the communication module 110 to transmit a signal requesting determination of the broadcasting server that provides the content to the ACR matching server 200. Here, the frequency band of the pre-stored IR signal may be a frequency band corresponding to a channel-change operation.

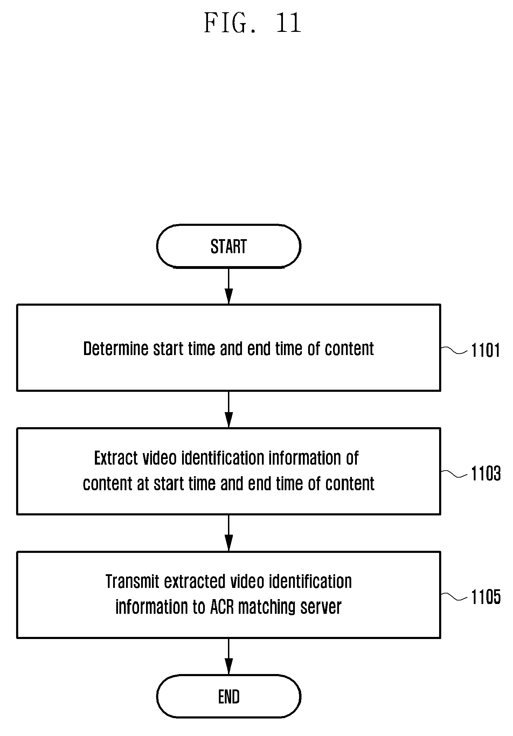

FIG. 11 is a flowchart of an example of a process, according to various embodiments of the present disclosure.

At operation 1101, the processor 130 may determine the start time and the end time of the content to be displayed by the display module 140. According to aspects of the disclosure, the start time of execution of the content may be the time when a signal requesting the execution of the content is received, and the end time of the content may be the time when another signal requesting execution of other content is received. Additionally or alternatively, the start time may be the time when playback of a particular audio signal begins and the end time may be the time when the playback of the particular audio signal ends.

At operation 1103, the processor 130 extracts the video identification information of the content at the start time and the end time of the content. For example, the processor 130 according to an embodiment may capture the screen of the content at the start time and the end time of the content, and may generate a signature corresponding to the captured screen. In some implementations, the extraction of the video identification information may be replaced by extraction of the audio identification information. In some implementations, the extraction of the audio identification information may include generating a digital signature of the extracted audio data after extraction of the audio data that is activated on one video screen of the content.

At operation 1105, the processor 130 transmits the extracted video identification information (*e.g*., a signature) to the ACR matching server 200. The processor 130 according to an embodiment may transmit the extracted video identification information (e.g., a signature) to the ACR matching server 200. In some implementations, the extraction of the video identification information may be replaced by the extraction of the audio identification information. Additionally or alternatively, in some implementations, the processor 130 may perform the ACR through extraction of the multimedia identification information (e.g., at least one of video information and audio information).

The processor 130 according to an embodiment of the present disclosure may extract the video identification information of the content at predetermined time intervals while the content is being reproduced, and may control the communication module 110 to transmit the extracted video identification information to the ACR matching server 200. Here, the extraction of the video identification information may include capturing a content screen (e.g., a video and/or audio frame that is part of the content) and generating a digital signature for the content. For example, the content may include at least one of audio data and the video data.

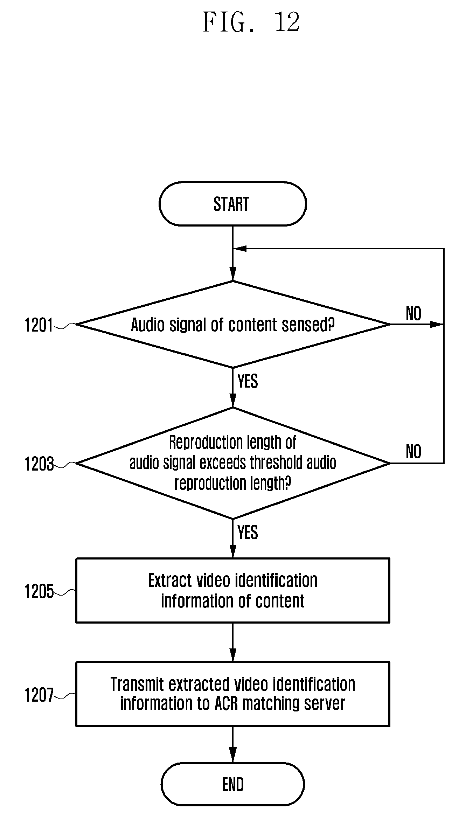

FIG. 12 is a flowchart of an example of a process, according to various embodiments of the present disclosure.

At operation 1201, the processor 130 determines whether an audio signal is being output by the electronic device. If no audio signal is being output, the processor 130 may periodically detect whether an audio is being output.

If an audio signal is being output by the electronic device, at operation 1203, the processor 130 determines whether a reproduction length of the audio signal exceeds a threshold audio reproduction length. For example, the processor 130 may determine whether the duration of the audio signal playback is longer than a threshold period. If the reproduction length of the audio signal does not exceed the threshold audio reproduction length, the processor 130 may periodically detect whether an audio signal is currently being output.

If the reproduction length of the sensed audio signal exceeds the threshold audio reproduction length, at operation 1205, the processor 130 extracts the video identification information of the content.

At operation 1207, the processor 130 transmits the extracted video identification information to the ACR matching server 200.

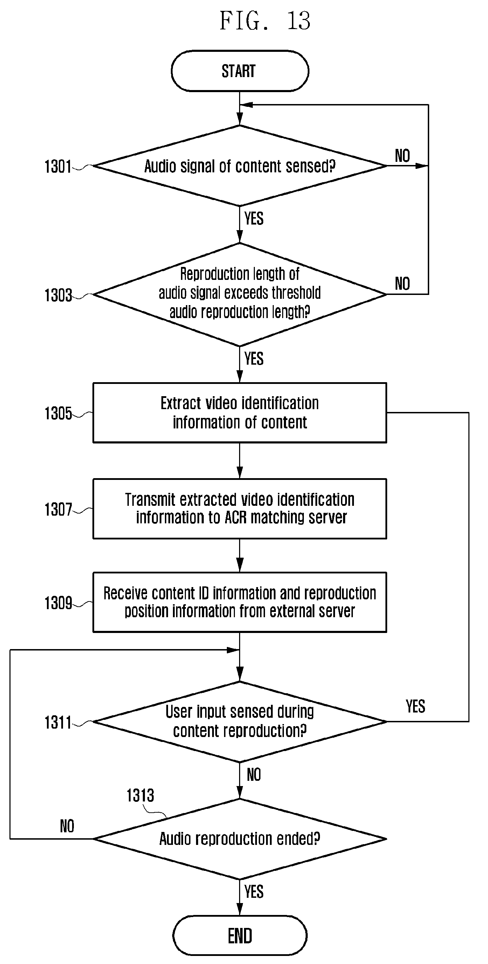

FIG. 13 is a flowchart of an example of a process, according to various embodiments of the present disclosure.

At operation 1301, the processor 130 determines whether an audio signal is being output by the electronic device. If no audio signal is being output, the processor 130 may periodically detect whether an audio signal is being output.

If the audio signal of the content is sensed, at operation 1303, the processor 130 determines whether a reproduction length of the audio signal exceeds a threshold audio reproduction length. If the reproduction length of the audio signal does not exceed the threshold audio reproduction length, the processor 130 may periodically detect whether an audio signal is being output.

If the reproduction length of the sensed audio signal exceeds the threshold audio reproduction length, at operation 1305, the processor 130 extracts video identification information of the content (e.g., an image signature associated with one or more video frames that are part of the content).

At operation 1307, the processor 130 transmits the extracted video identification information to the ACR matching server 200.

At operation 1309, the processor 130 receives content ID and reproduction position information from the external server. The processor 130 according to an embodiment may detect a state of the content being reproduced using a media frame rate while the audio signal is generated.

At operation 1311, the processor determines whether a user input is detected during reproduction of the content. If the user input is detected while the content is reproduced, the processor 130 according to an embodiment may transmit related information to the external server. For example, the processor 130 may identify a specific content playback state (e.g., pause, fast forward, or fast backward) of the content. If the association information to be displayed on the reproduction position of the content is identified, the processor 130 according to an additional embodiment may display the corresponding information on the screen.

If it is determined that the user input is detected during reproduction of the content, the processor 130 extracts video identification information associated with the content (e.g., an image signature associated with one or more video frames that are part of the content) and transmits the extracted video identification information to the ACR matching server 200.

At operation 1313, if it is determined that the user input is not detected during reproduction of the content, the processor 130 determines whether the reproduction of the audio is ended. If the audio reproduction is not ended, the processor 130 may periodically determine whether user input is received while the content is being reproduced.

Each of the above-described constituent elements of the electronic device according to various embodiments of the present invention may be configured by one or more components, and the name of the corresponding constituent element may differ depending on the kind of the electronic device. The electronic device according to various embodiments of the present invention may be configured to include at least one of the above-described constituent elements, and may omit some constituent elements or may further include other additional constituent elements. Further, by combining some constituent elements of the electronic device according to various embodiments of the present invention to form one entity, functions of the corresponding constituent elements before being combined can be performed in the same manner.

The term "module", as used in various embodiments of the present invention, may refer to a unit that includes, for example, one of hardware, software, and firmware, or a combination of two or more thereof. The "module" may be interchangeably used, for example, with the term, such as unit, logic, logical block, component, or circuit. The "module" may be the minimum unit or a part of a component integrally formed. The "module" may be the minimum unit or a part thereof that performs one or more functions. The "module" may be mechanically or electronically implemented. For example, the "module" according to various embodiments of the present invention may include at least one of an Application-Specific Integrated Circuit (ASEC) chip, a Field Programmable Gate Array (FPGA) or a programmable logic device, which has been known or is to be developed, to perform certain tasks.

According to various embodiments, at least a part of devices (e.g., modules or their functions) or methods (e.g., operations) according to various embodiments of the present invention may be implemented by instructions that are stored in a computer readable storage medium in the form of programming modules. In the case where the instructions are executed by one or more processors (e.g., processors 160), the one or more processors may perform functions corresponding to the instructions. The computer readable storage medium may be, for example, the storage module 130. At least a part of the programming module may be implemented (e.g., executed) by the processor 160. At least a part of the programming module may include, for example, modules, programs, routines, sets of instructions, or processes, which perform one or more functions.

FIGS. 1-13 are provided as an example only. At least some of the operations discussed with respect to these figures can be performed concurrently, performed in different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples.

The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the present disclosure has been particularly shown and described with reference to the examples provided therein, it will be understood by those skilled in the art that various changes in form and details may be made therein without departing from the spirit and scope of the present disclosure as defined by the appended claims.

## Claims

1. An electronic device comprising:
a memory;
a display; and
at least one processor operatively coupled to the memory and the display, configured to:
identify a broadcasting server providing content that is currently displayed on the display by using Automatic Content Recognition (ACR),
compare a template corresponding to the identified broadcasting server with a template corresponding to a predetermined broadcasting server; and
detect whether the broadcasting server providing the content that is currently displayed on the display is changed based on an outcome of the comparison.

2. The electronic device of claim 1, wherein the at least processor transmits a request to an ACR matching server to detect whether the broadcasting server providing the content that is currently displayed is changed, the request being transmitted in response to a shot boundary being detected.

3. The electronic device of claim 1, wherein the at least processor transmits a request to an ACR matching server to detect whether the broadcasting server providing the content that tis currently displayed is changed, the request being transmitted an infrared(IR) signal being received from an external input device.

4. The electronic device of claim 3, wherein the at least processor transmits to the ACR matching server video identification information corresponding to the content that is currently being displayed.

5. The electronic device of claim 4, wherein the request is transmitted in response to the IR satisfying a predetermined condition.

6. The electronic device of claim 5, wherein the predetermined condition is satisfied when the IR signal corresponds to a channel-change operation.

7. An electronic device comprising:
a memory;
a display;
a communication module; and
at least one processor operatively coupled to the memory, the display, and the communication module, configured to:
identify at least one of a start time and an end time of content currently displayed on the display;
generate video identification information corresponding to the content based on at least one of the start time and the end time; and
control the communication module to transmit the video identification information to an Automatic Content Recognition (ACR) server.

8. The electronic device of claim 7, wherein:
the start time is identified based on at least one of a first channel-change signal that is received by the electronic device and an audio signal that is being output by the electronic device, and
the end time is identified based on at least one of a second channel-change signal that is received by the electronic device and the audio signal.

9. The electronic device of claim 7, wherein the video identification information is transmitted to the ACR server in response to at least one of (i) detecting that a length of audio that is being output by the electronic device exceeds a threshold length, and (ii) detecting a predetermined input.

10. The electronic device of claim 7, wherein the video identification information corresponding to the content is periodically generated and transmitted to the ACR server while the content is being displayed.

11. A method comprising:
identifying, by an electronic device, a broadcasting server providing content that is currently displayed on a display of the electronic device by using Automatic Content Recognition (ACR),
comparing, by the electronic device, a template corresponding to the identified broadcasting server with a template corresponding to a predetermined broadcasting server; and
detecting, by the electronic device, whether the broadcasting server providing the content that is currently displayed on the display is changed based on an outcome of the comparison.

12. The method of claim 11, wherein detecting whether the broadcasting server providing the content that is currently displayed is changed comprises transmitting a request to an ACR matching server to detect whether the broadcasting server providing the content that is currently displayed is changed, the request being transmitted in response to a shot boundary being detected.

13. The method of claim 11, wherein detecting whether the broadcasting server providing the content that is currently displayed is changed comprises transmitting a request to an ACR matching server to detect whether the broadcasting server providing the content that is currently displayed is changed, the request being transmitted an infrared (IR) signal being received from an external input device.

14. The method of claim 13, wherein transmitting the request includes transmitting to the ACR matching server video identification information corresponding to the content that is currently being displayed.

15. The method of claim 14, wherein the request is transmitted in response to the IR satisfying a predetermined condition.
